(19) Europäisches Patentamt / European Patent Office / Office européen des brevets

(11) **EP 3 132 155 B1**

(12) **EUROPÄISCHE PATENTSCHRIFT**

(45) Veröffentlichungstag und Bekanntmachung des Hinweises auf die Patenterteilung:
**30.09.2020  Patentblatt 2020/40**

(51) Int Cl.:
*F16F 1/366* *(2006.01)*     *B29C 70/30* *(2006.01)*
*B29L 31/00* *(2006.01)*

(21) Anmeldenummer: **15717148.9**

(86) Internationale Anmeldenummer:
**PCT/EP2015/057979**

(22) Anmeldetag: **13.04.2015**

(87) Internationale Veröffentlichungsnummer:
**WO 2015/158661 (22.10.2015 Gazette 2015/42)**

(54) **TORSIONSBELASTETES STABFÖRMIGES BAUTEIL UND VERFAHREN ZU DESSEN GESTALTUNG**

BAR-SHAPED COMPONENT LOADED IN TORSION AND METHOD FOR CONCEIVING SUCH

PIÈCE EN FORME DE BARRE SOLLICITÉE EN TORSION ET PROCEDE DE CONCEPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.04.2014  DE 102014207151**

(43) Veröffentlichungstag der Anmeldung:
**22.02.2017  Patentblatt 2017/08**

(73) Patentinhaber:
• **thyssenkrupp AG**
**45143 Essen (DE)**
• **ThyssenKrupp Federn und Stabilisatoren GmbH**
**58119 Hagen (DE)**

(72) Erfinder:
• **HUFENBACH, Werner**
**01324 Dresden (DE)**
• **KIELE, Jörn**
**01097 Dresden (DE)**
• **LEPPER, Martin**
**01279 Dresden (DE)**
• **WERNER, Jens**
**01640 Coswig (DE)**

(74) Vertreter: **thyssenkrupp Intellectual Property GmbH**
**ThyssenKrupp Allee 1**
**45143 Essen (DE)**

(56) Entgegenhaltungen:
**FR-A1- 2 859 735     US-A1- 2014 021 666**

**Beschreibung**

Gegenstand der vorliegenden Erfindung ist eine Torsionsfeder, insbesondere als Stab- oder Schraubenfeder aus faserverstärktem Kunststoff, die eine verbesserte Auslastung der Tragfähigkeit aller Materialschichten gewährleistet und ein Verfahren zur Auslegung einer derartigen Feder.

Federn kommen häufig im Fahrwerk von Kraftfahrzeugen zum Einsatz. Sie unterliegen somit ebenfalls den Leichtbaubestrebungen, die zuallererst bei diesen ungefederten Massen ansetzen. In diesem Zusammenhang ist der Einsatz von Faserverbundwerkstoffen (FVW) bereits mehrfach vorgeschlagen worden. Dies betrifft insbesondere Torsionsfedern aus kohlefaserverstärkten Kunststoffen (CFK) und glasfaserverstärkten Kunststoffen (GFK). Besonders problematisch ist dabei die belastungsgerechte, jedoch gleichzeitig kostengünstige Fertigung dieser Bauteile.

Erschwerend kommt hinzu, dass die Fasern jeweils nur Zug- oder Druckkräfte übertragen können und somit die makroskopische Schubbelastung im Federdraht in einen Zug- und einen Druckanteil aufgeteilt werden muss (in Bezug auf die Spannungs-Hauptachsen +-45° zur Stabachse entsprechend der mohrschen Spannungstheorie).

Heute bekannte Federn aus FVW zielen darauf ab, mittels Wicklungen der Fasern in einem +/-45°-Winkel zur Stabachse die Zug- und Druckkraftverteilung im Material möglichst günstig aufzunehmen.

Es sind auch reine +45° Zugfaserwicklungen bekannt, wobei die Schubspannungsanteile durch das Matrixmaterial bzw. durch Druckspannungen im Kern getragen werden.

Ziel bei der Konstruktion geeigneter Federn ist es, das gesamte eingesetzte Federmaterial homogen zu auszulasten. So soll erreicht werden, dass es keine dedizierten Schwachstellen im Material gibt, sondern dass das gesamte Material bei einer einheitlichen Maximalbeanspruchung seine Belastungsgrenze erreicht. Dies entspricht der bestmöglichen Materialausnutzung und damit dem besten erreichbaren Leichtbaugrad.

Die EP 0637700 beschreibt eine Federkonstruktion, bei der Kohlefasern eingesetzt werden, die in einem Winkel von +-30° bis +-60° um die Stabachse gewickelt sind. Kennzeichnend ist, dass eine unterschiedliche Anzahl von Zug- und Druckfasern eingesetzt wird. Insbesondere wird die Zahl der Druckfasern gegenüber der der Zugfasern erhöht. Angestrebt wird dabei eine gleichmäßigere Belastung der Fasern, was eine bessere spezifische Ausnutzung des eingesetzten Materials bewirkt. Zwar wurde dadurch, dass die Fasern der Zug- und Druckrichtung in verschiedenen Mengen-Verhältnissen, respektive verschiedenen Schichtdicken benutzt werden, das Material besser ausgenutzt, jedoch wird die Abhängigkeit der Werkstoffauslastung vom Federdrahtdurchmesser nicht beseitigt.

Die US 5603490 schlägt vor, lediglich Fasern in der Zugrichtung und keine Druck belasteten Fasern einzusetzen. Die Fasern sollen so aufgewickelt werden, dass sie nur zugbelastet sind. Bei einer Feder mit Hohlprofilquerschnitt würde dies aufgrund der Schubspannungen schnell zum Versagen führen, weshalb hier ein druckstabiler Kern benötigt wird, welcher die Spannungen aufnimmt. Der andauernde hydrostatische Spannungszustand im Kern und der Schubspannungszustand in der gewickelten Faserhülle führen allerdings zu einem nachteiligen Kriechen der Kunststoffmatrix (Epoxy). Daher ist diese Lösung z.B. für eine Anwendung im Fahrzeugbau (Dauerbelastung durch das Fahrzeuggewicht) nicht anwendbar. Durch den Einsatz nur einer Faserrichtung wird zwar das Faserpotential auf Zugbelastung optimal genutzt, aber durch die Schubspannungen, welche aufgrund der fehlenden Druckfaserabstützung nun zum größten Teil durch die Kunststoffmatrix übertragen werden müssen, kommt es zu starken Kriecherscheinungen bei Dauerbelastung

In der WO 2014/014481 A1 wird eine Faserkonstruktion vorgeschlagen, bei der die Anzahl der Fasern in Schichten und Kern Vielfache einer gemeinsamen Basiszahl sind. Weiterhin wird die Verwendung mehrerer verschiedener Materialien in einer Feder (z.B. Glas, Carbon oder in Mischung) offenbart. Darüber hinaus wird offenbart, dass die Winkel der einzelnen Fasern der Faserlagen zur Stabachse alternieren können (insbesondere zwischen positivem und negativem Winkel). Der Kern der Feder kann aus unidirektionalen Fasern bestehen es sind jedoch auch ein Vollkern oder ein Hohlkern offenbart. Auch ein Kern aus Material mit Formgedächtnis wird vorgeschlagen. Es wird zwar erwähnt, dass man das Federmaterial aus gemischten Werkstoffen zusammensetzen kann, jedoch wird keine Handlungsanweisung dazu gegeben, wodurch die Vorgehensweise und Wirkung einer Mischbauweise unklar bleiben. Die Fasern sollen in Anzahl des ganzzahligen Vielfachen einer gemeinsamen Bezugsbasis in den Schichten angeordnet werden, wobei die Wirkung ebenfalls unklar bleibt. Diese Anordnung hat den Nachteil, dass die Fasern nur in Anzahlen von ganzzahligen Faktoren in den Schichten vorhanden sind und somit eine optimale Schichtdickenanpassung unterbleibt.

Die Federbauweisen aus dem Stand der Technik erreichen keinen optimalen Leichtbaugrad, da sie das eingesetzte Material nicht effektiv ausnutzen.

Es stellt sich somit die Aufgabe, eine Anordnung der Fasern innerhalb eines torsionsbelasteten Federdrahtes zu erzeugen, bei welcher alle Fasern in allen Querschnittsbereichen des Federdrahtes möglichst effektiv, respektive homogen ausgelastet sind, um die höchst mögliche massebezogene Energiespeicherdichte zu erreichen.

Insbesondere ist es Aufgabe der vorliegenden Erfindung, ein Verfahren zur Auslegung einer derartigen Feder vorzuschlagen. Der Federdraht (auch Federstab) ist in einer Schraubenfeder als Helix aufgewickelt. Die Feder, speziell die Schraubenfeder, verfügt über eine Federachse, um die der Federdraht helixartig herumgeführt ist. Der Querschnitt des Federdrahtes ist vorzugsweise kreisringförmig, kann aber auch elliptisch oder polygonal oder in einem anderen Querschnitt sein.

US 2014/021666 A1 zeigt einen weiteren Stand der Technik.

Erfindungsgemäß wird die Aufgabenstellung mit einer Federkonstruktion nach Anspruch 1 gelöst. Ein vorteilhaftes Verfahren zur Auslegung einer erfindungsgemäßen Feder ist ab Anspruch 17 offenbart. Vorteilhafte Ausführungsformen sind in den rückbezogenen Unteransprüchen offenbart.

Insbesondere wird dieser Aufgabenstellung durch die Erfüllung der folgenden drei Teilaufgaben genügt:

- die inneren Schichten des Federdrahtes sollen ebenfalls mittragen, also hochausgelastet werden obwohl sie durch die geometrischen Verhältnisse kaum gedehnt werden,

- Zug- und Drucklagen sollen gleichmäßig ausgelastet werden,

- zwischen den Faserlagen soll die Matrix möglichst wenige Schubkräfte übertragen respektive möglichst geringe Spannungen aufweisen, um ein Kriechen der Matrix und damit der gesamten Feder zu verhindern.

Der Bereich des torsionsbelasteten stabförmigen Bauteils umfasst lediglich die Federtragstruktur ohne die Lasteinleitungselemente, wie zum Beispiel angepasste Bereiche am Federteller oder der Federeinspannung.

Im Weiteren werden die folgenden Begriffe in den nachstehenden Bedeutungen gebraucht:

| | |
|---|---|
| - Zugrichtung: | Vorzeichen + |
| - Druckrichtung: | Vorzeichen - |
| - Stabachse: | - eine Achse im Mittelpunkt des Federdrahts entlang seiner Längserstreckung, die als Federdrahtachse oder Federstabachse oder einfach Stabachse bezeichnet wird |
| Faserwinkel $\alpha_j$: | - der Faserwinkel gibt den Differenzwinkel der Faserorientierung zur Stabachse an. |
| - Lage $L_i$: | - Eine Lage kann mehrere Schichten in sich vereinen, z.B. eine Lage Multiaxialgelege / Helixwicklung / Geflecht enthält im allg. 2 Schichten mit unterschiedlicher Faserorientierung (jeweils eine + und eine - Schicht; z.B. +-45°). Die Schichten der Lage sind üblicherweise miteinander verbunden (z.B. onduliert oder gewirkt oder vernäht oder stoffschlüssig fixiert. |
| | - Eine Lage UD(unidirektional)-Gelege enthält dagegen im allg. nur eine Schicht in einer Orientierung ausgerichteter Fasern. |
| | - Mehrere Lagen können jedoch auch eine Schicht bilden (mehrere benachbarte UD-Lagen mit gleicher Winkelorientierung bilden eine UD-Schicht). |
| | - Eine Lage besteht im allgemeinen aus anorganischen Verstärkungsfasern (bspw. Basaltfasern, Glasfasern), metallischen Verstärkungsfasern (bspw. Stahlfaser), organischen Verstärkungsfasern (bspw. Kohlenstofffasern, Aramidfasern) oder Naturfasern (bspw. Hanffasern). |
| | - Eine Lage besitzt eine zugeordnete Lagenwandstärke $LW_i$ |
| | - Eine Lage kann auch eine homogene Kunststofflage ohne Verstärkungsfasern sein und sie wird als nicht-tragend klassifiziert (zum Beispiel: äußerer Abschluss der Anordnung). |
| | - Eine Lage kann auch eine kurz- oder -langfaserverstärkte Kunststofflage sein, in der die Fasern ohne Vorzugsrichtung angeordnet sind und sie wird als nicht-tragend klassifiziert. |
| | - Eine Lage kann auch aus einer metallischen Werkstofflage bestehen (zum Beispiel eine Abschlusslage aus Metallblech) |
| | - Die Lagennummerierung i nimmt von innen nach außen zu |
| - Schicht $S_j$: | - Bei endlos-/textilfaserverstärkten Schichten weisen alle Fasern einer Schicht $S_j$ eine einheitliche Winkel-Orientierung $\alpha_j$ auf. |
| | - In einer Schicht können jedoch auch Fasern unterschiedlichen Materials $M_j$ nebeneinander oder vermischt vorliegen. |
| | - Schichten können auch homogene Kunststofflagen ohne Verstärkungsfasern, Lagen mit einer kurz- oder langfaserverstärkten Kunststofflage , metallische Lagen oder ähnliches sein |
| | - Die Schichtnummerierung j nimmt von innen nach außen zu. |
| | - Die Schichten mit Faserwinkel im Bereich von 20° bis 70° in der (Zugrichtung +) oder -20° bis -70° (Druckrichtung -) werden als tragende Schichten bezeichnet (vorzugsweise 30° bis 60° in der (Zugrichtung +) oder -30° bis -60° (Druckrichtung -)) |

(fortgesetzt)

| | |
|---|---|
| | - Eine tragende Schicht dient entweder vorwiegend der Aufnahme von Zug- (Zeichen +) oder Druckspannungen (Zeichen -) in Faserrichtung |
| | - Alle Schichten mit Winkeln außerhalb des Winkelbereichs von 20° bis 70° in der (Zugrichtung +) oder -20° bis -70° (Druckrichtung -) werden als nicht-tragend klassifiziert. |
| - QuerschnittsflächeA$_{Sj}$: | - Jede Schicht hat eine zugeordnete Querschnittsfläche A$_{Sj}$ |
| | - Die Normale der Querschnittsfläche ist die Stabachse |
| | - Die Berechnung der Querschnittsfläche erfolgt beispielsweise bei einem Kreisringquerschnitt über die Formel für den Flächeninhalt des Kreisrings |
| - Schichtachse: | - Jede Schicht besitzt ein Achse welche im Faserwinkel $\alpha_j$ zur Stabachse verläuft und mit dem Schichtverlauf in einer Helix entlang der Stabachse rotiert. |
| - Schichtdurchmesser D$_j$: | - Arithmetisch gemittelter Durchmesser aus Innen- und Außendurchmesser der entsprechenden Schicht |
| | - Für den Fall, dass wie bei ondulierten Lagen (bspw. Geflecht) 2 Schichten abgeleitet werden, besitzen beide Schichten denselben Schichtdurchmesser |
| - Schichtsteifigkeit $E_{Sj}$: | Die Schichtsteifigkeit $E_{Sj}$ entspricht dem Einzel- oder Mischmodul aller Faser- und Matrixkomponenten der jeweiligen Schicht (entsprechend der Mischungsregel im Rahmen der klassischen Laminattheorie (z.B. Puck, Tsai, Niederstadt, Geier) transformiert auf eine Orientierung von +/- 45° zur Stabachse |
| | - Nur Absolutwerte werden verwendet |
| | - Berechnungsformel für die Schichtsteifigkeit $E_{Sj}$: |

$$\frac{1}{E_{S_j}} = \frac{c^2}{E_1}(c^2 - s^2 v_{12}) + \frac{s^2}{E_2}(s^2 - c^2 v_{21}) + \frac{c^2 s^2}{G_{12}}$$

$$mit\ c = \cos(|\alpha| - 45°)\ und\ s = \sin(|\alpha| - 45°)$$

| | |
|---|---|
| | $E_{Sj}$ - Schichtsteifigkeit, $E_1$ - Steifigkeit längs zur Faser des Materials M$_j$, $E_2$-Steifigkeit quer zur Faserrichtung des Materials M$_j$, $G_{12}$-Schubmodul des Materials M$_j$, $v_{12}$ - Große Querkontraktionszahl des Materials M$_j$, $v_{21}$ - Kleine Querkontraktionszahl des Materials M$_j$ |
| - Gruppe G$_k$: | - Eine oder mehrere aneinanderliegende, tragende Schichten einer Belastungsrichtung (Zug- oder Druckausrichtung) bilden zusammen jeweils eine Gruppe G$_k$ |
| | - Die Gruppenbildung ist unabhängig von den verwendeten Materialien oder der Lagenzugehörigkeit |
| | - Als nicht-tragend klassifizierte Schichten oder Lagen werden bei der Bewertung des Aneinanderliegens nicht berücksichtigt, damit können auch ggf. sich physikalisch nicht berührende Schichten als aneinanderliegend angesehen werden. |
| | - Die Zählung der Gruppen beginnt innen |
| - Gruppenachse: | Jede Gruppe besitzt entsprechend der Zug oder Druckausrichtung eine Gruppenachse die in +45° (Zug) oder -45° (Druck) zur Stabachse verläuft und mit dem Schichtverlauf in einer Helix entlang der Stabachse rotiert |
| - Gruppensteifigkeit $E_{Gk}$: | Die Gruppensteifigkeit $E_{Gk}$ entspricht dem in Gruppenachsenrichtung transformierten, flächengewichteten Einzel- oder Mischmodul aller Faser- und Matrixkomponenten der jeweiligen Gruppe (entsprechend der Mischungsregel im Rahmen der klassischen Laminattheorie (z.B. Puck, Tsai, Niederstadt, Geier) |
| | - Nur Absolutwerte werden verwendet |
| | - Berechnungsformel für die Gruppensteifigkeit $E_{Gk}$: |

$$E_{G_k} = \frac{\sum_j E_{S_j} A_{S_j}}{\sum_j A_{S_j}}$$  wobei Schichten j zur Gruppe k gehören

$E_{Gk}$ - Gruppensteifigkeit der Gruppe k, $E_{Sj}$ - Schichtsteifigkeit der Schicht j, $A_{Sj}$ - Querschnittsfläche der Schicht j

(fortgesetzt)

| - Gruppendehnsteifigkeit $F_{G_k}$: | - Produkt aus Gruppensteifigkeit und zugeordneter Querschnittsfläche der Gruppe |
|---|---|
| | - Berechnungsformel für die Gruppendehnsteifigkeit $F_{G_k}$: $$F_{G_k} = E_{G_k} \times \sum_j A_{S_j}$$ wobei Schichten j zur Gruppe k gehören $F_{G_k}$ - Gruppendehnsteifigkeit der Gruppe k, $E_{G_k}$ - Gruppensteifigkeit der Gruppe k, $A_{S_j}$ - Querschnittsfläche der Schicht j |
| - Paar $P_n$: | - Zwei aneinander liegende Gruppen bilden jeweils ein Paar (aus der Gruppenbildung ergibt sich zwangsweise, dass ein Paar immer aus 2 Gruppen mit einer Gruppenachse +45° und -45° besteht) |
| | - Als nicht-tragend klassifizierte Schichten oder Lagen werden bei der Bewertung des Aneinanderliegens nicht berücksichtigt, damit können auch ggf. sich physikalisch nicht berührende Gruppen als aneinanderliegend angesehen werden. |
| | - Die Paarbildung beginnt an der innersten Gruppe und wird sukzessive nach außen fortgeführt |
| | - Eine bereits einem Paar erfolgreich zugeordnete Gruppe kann nicht mit einer weiteren aneinanderliegenden Gruppe ein Paar bilden. |
| - Gruppenverhältnis $GV_n$: | - Den Gruppen in einem Paar wird ein Gruppenverhältnis wie folgt zugeordnet: Gruppendehnsteifigkeit der Gruppe mit Gruppenachse +45° geteilt durch Gruppendehnsteifigkeit der Gruppe mit Gruppenachse -45° (die Gruppendehnsteifigkeiten sind dabei vorzeichenlos, weil nur Absolutwerte der Gruppensteifigkeit in die Berechnung einfließen) |
| - Paarverhältnis $PV_n$: | - Zwei aneinander liegenden Paaren wird ein Paarverhältnis wie folgt zugeordnet: Steifigkeit des inneren Paares geteilt durch Steifigkeit des anliegenden Paares |
| Druck-Set: | - Alle Gruppen der Druckrichtung bilden das Druck-Set. |
| | - Die Gruppen im Set sind von innen nach außen sortiert |
| Zug-Set: | - Alle Gruppen der Zugrichtung bilden das Zug-Set. |
| | - Die Gruppen sind von innen nach außen sortiert. |
| Mischfaser | Roving oder Faserbündel, welcher sich aus Filamenten verschiedenen Materials zusammensetzt |

Für die weiterführenden Betrachtungen zum Auslegungsverfahren bzw. der Faseranordnung im Federdraht wird von einer idealen Übereinstimmung der berechneten oder definierten Faserwinkel $\alpha_j$ im gefertigten Bauteil ausgegangen. Etwaige Winkelverschiebungen, jeweils in + und in -Richtung von den berechneten Werten, aufgrund von Umformoperationen (zum Beispiel: Das Aufwickeln des gestreckten Federdrahts entlang der Federachse in eine Helix), anlagenspezifischen Fertigungsabweichungen (zum Beispiel: Schwankungen der Rotationsgeschwindigkeit der Wickelanlage) oder Verschiebungen durch Handlingoperationen (zum Beispiel: Manueller Transport der Zwischenprodukte) im gefertigten Bauteil sind für die Aussagen des vorgestellten Auslegungsverfahrens nicht relevant, solange die absolute Winkeldifferenz weniger als 20°, vorzugsweise weniger als 10° und ganz besonders bevorzugt weniger als 5° beträgt.

Das bevorzugte Verfahren zur Auslegung der erfindungsgemäßen Feder sieht vor:
Eine Vorauslegung der Feder wird basierend auf Erfahrungswerten und nach dem Stand der Technik vorgenommen. Die Parameter dieser Feder werden als Startparameter zur Optimierung der Feder nach dem erfindungsgemäßen Verfahren genutzt.

Alle nachfolgend aufgeführten Auslegungsschritte müssen iterativ einzeln oder gesamtheitlich wiederkehrend durchgeführt werden um in einem Schleifenprozess alle geforderten Auslegungskriterien zu erfüllen.

Schritt 1:

In einem ersten Schritt wird der Aufbau des Federdrahtes so gestaltet, dass in einem der beiden Sets mindestens einmal die Gruppensteifigkeit benachbarter Gruppen von innen nach außen abnimmt. Bevorzugt haben in jeweils einem Set weitere Gruppen von innen nach außen eine gleiche oder eine von innen nach außen abnehmende Gruppensteifigkeit. Besonders bevorzugt nimmt die Gruppensteifigkeit benachbarter Gruppen über den gesamten Radius des Federdrahtes und in beiden Sets von innen nach außen ab.

Dies wird z.B. mittels einer oder einer Kombination von zwei oder drei der folgenden Möglichkeiten erzielt:

Möglichkeit I: Unterschiedliches Fasermaterial

- hierzu werden in den inneren Gruppen hochsteife Fasern (z.B. UHM-CF), in den mittleren Gruppen mittelsteife Fasern (z.B. IM-CF), weiter außen steife Fasern (z.B. HT-CF) und in den äußeren Gruppen niedrig steife Fasern (z.B. GF) verwendet.

Möglichkeit II: Unterschiedliche Faserwinkel

- Die Feinabstimmung der Steifigkeiten kann durch die Faserwinkel in den Schichten geschehen, so dass bei mehreren Schichten gleichen Materials, von innen nach außen die Steifigkeit trotzdem durch den Faserwinkel angepasst werden kann.

Möglichkeit III: Mischung verschiedener Fasern

- Werden die Steifigkeitssprünge für einen Ausgleich durch die Faserwinkel zu groß, kann auch in den Schichten einer Gruppe oder auch von einer Gruppe zur nächsten Gruppe unterschiedliches Material mit einer Mischung aus Grundfasertypen zum Einsatz kommen.

Schritt 2:

Nun werden von innen nach außen Paare gebildet. Ursache für das Problem des Kriechens von Matrixmaterial im Falle von Dauerbelastungen ist i.A. eine sehr hohe Schubspannung zwischen den Gruppen in der Feder. Um Schubspannungen zwischen den Gruppen zu vermeiden sollen die Gruppen eines Paares vergleichbare Gruppendehnsteifigkeiten aufweisen, die zum Beispiel mittels der Querschnittsfläche, dem Faservolumengehalt, dem Faserwinkel oder der Materialauswahl beeinflussbar sind. Aus den beiden Gruppendehnsteifigkeiten eines Paares errechnet sich das Gruppenverhältnis. Das Gruppenverhältnis muss innerhalb eines vorgegebenen Bereichs liegen. Das Auslegungsverfahren sieht vor, dass das Gruppenverhältnis GV im Bereich $0{,}2 <= GV <= 5$, vorzugsweise: $0{,}5 <= GV <= 2$ und ganz besonders bevorzugt $0{,}75 <= GV <= 1{,}33$ liegt.

Zur Erzielung gültiger Gruppenverhältnisse ist z.B. die Kompensation der unterschiedlichen Materialsteifigkeiten von unterschiedlichen Faserarten über angepasste Querschnittsflächen notwendig. Dazu wird die Fasersteifigkeit in einer bevorzugten Verfahrensweise entsprechend der Auslastbarkeit der Fasern gewählt. So können bspw. UHM-CF nur geringe Druckbelastungen aufnehmen und sind daher vorzugsweise für zugbelastete Schichten effizient einsetzbar. IM-CF Fasern besitzen eine gute Kompressionsfähigkeit und sind daher auch für druckbelastete Schichten gut verwendbar. Beispielsweise bilden nun eine zugbelastete Gruppe aus UHM-CF Fasern und eine druckbelastete Gruppe aus IM-CF Fasern mit jeweils nur einer Schicht ein Paar. Die zugbelastete Gruppe (UHM-CF) besitzt nun eine höhere Gruppensteifigkeit als die druckbelastete Gruppe (IM-CF). Um ein bevorzugtes Gruppenverhältnis einzustellen, ist es möglich die Schichtwandstärke und damit die Querschnittsfläche anzupassen. Das Produkt aus Gruppensteifigkeit und zugeordneter Querschnittsfläche bildet die Gruppendehnsteifigkeit. Für das Paar, bestehend aus UHM-CF und IM-CF Fasern, können die Schichtwandstärken beispielsweise für die zugbelastete Gruppe 1mm und für die druckbelastete Gruppe 1,5 mm betragen. Damit sind über die zugeordneten Querschnittsflächen die Gruppendehnsteifigkeiten für die zugbelastete und die druckbelastete Gruppe zueinander angleichbar und das Gruppenverhältnis besitzt einen Wert innerhalb des gewünschten Bereichs. Zwischen den Gruppen bestehen damit nahezu keine Schubspannungen und der Federdraht besitzt damit ein vorteilhaftes Kriechverhalten.

Weitere bevorzugte Ausführungsformen sehen den Einsatz einer oder mehrerer sehr dünner und damit kaum zum Bauteiltragverhalten beitragender Zwischen- oder Außenschichten vor, die durch ihre Faserorientierung beispielsweise zur Federquerkraftsteifigkeit beitragen oder eine Abschlussschicht gegenüber medialer Umweltbelastung darstellen. Erfindungsgemäß sollen jedoch nur maximal 25%, vorzugsweise 15%, besonders bevorzugt 5%, der Federdrahtmasse (ohne Kern) aus als nicht-tragend klassifizierten Schichten bestehen.

Weiterhin bevorzugt ist die Verwendung eines Federdrahtes, in welchem die Gruppen des Federdrahtes mindestens zu einem Anteil von 50 %, bevorzugt von 75% und besonders bevorzugt von 95%, der Federdrahtgesamtmasse (ohne Kern) aus Gruppen bestehen, die innerhalb des Zug- und Druck-Sets von innen nach außen eine abnehmende oder gleichbleibende Gruppensteifigkeit aufweisen.

Weiterhin bevorzugt ist die Verwendung eines Federdrahtes, in welchem die Gruppen des Federdrahtes mindestens zu einem Anteil von 50 %, bevorzugt von 75% und besonders bevorzugt von 95%, der Federdrahtgesamtmasse (ohne Kern) erfolgreich zu einem Paar zugeordnet wurden.

Weiterhin bevorzugt ist das Aufbringen einer äußeren Kunststofflage bzw. Lage aus Matrixmaterial ohne Faserverstärkung. Das erfindungsgemäße Verfahren sieht jedoch vor, dass mindestens 75%, bevorzugt 85%, besonders bevorzugt 95% der elastischen Energie im Belastungsfall von dem Faserverbundwerkstoff und nicht von der äußeren Kunststofflage gespeichert werden. Dies umfasst auch die Möglichkeit, dass die äußere Kunststofflage reißt, jedoch die faserverstärkten Lagen und der optional vorhandene Kern, unbeschädigt bleiben.

Bevorzugt erfolgt die rechnerische Auslegung der erfindungsgemäßen Feder mit Computerunterstützung. Nach der Auslegung entsprechend dem erfindungsgemäßen Verfahren wird die Feder mit Verfahren aus dem Stand der Technik gefertigt.

Erfindungsgemäß ist der tragende Federquerschnitt (Beschichtungen etc. die nicht-tragend sind, werden vernachlässigt) in seinen Steifigkeitseigenschaften derart angepasst, dass eine homogene Auslastung des Materials über den gesamten Federdrahtquerschnitt auftritt. Dies erfolgt bevorzugt, indem die Schichtsteifigkeit in radialer Richtung, ausgehend von der Stabachse, abnimmt. Insbesondere nimmt die Gruppensteifigkeit von innen nach außen ab, um die Minderbelastung der inneren Lagen bzw. die Überlastung der äußeren Lagen zu kompensieren. Die Feder ist bevorzugt so ausgelegt, dass die Belastungsgrenze in allen Lagen nahezu gleichzeitig erreicht wird.

Bevorzugt weist der Federstab der erfindungsgemäßen Feder einen kreisförmigen Querschnitt auf. Es sind jedoch auch elliptische oder polygonale Querschnitte möglich. Die Feder weist optional einen Kern auf. Dieser besteht vorzugsweise aus Faserverbundmaterial, bei dem die Fasern unidirektional, parallel zur Stabachse verlaufen. Weitere bevorzugte Ausführungsformen sehen einen hohlen Kern vor, bei dem ein axialer Hohlraum von einem Faserverbundmaterial oder einer unverstärkten Kunststoffumhüllung umgeben ist. Weiterhin bevorzugt ist ein Kern, der vollständig aus Kunststoff besteht oder ein Kern, der ausschließlich durch einen Hohlraum gebildet wird.

Weiterhin bevorzugt bilden benachbarte Paare ein, nur wenig voneinander abweichendes Paarverhältnis, so dass auch zwischen den Paaren möglichst geringe Schubspannungen auftreten und somit der Federdraht eine möglichst geringe Kriechneigung aufweist. Dieses Paarverhältnis berechnet sich aus den Steifigkeiten der Gruppen der beiden Paare.

Die erfindungsgemäße Feder wird bevorzugt im Fahrzeugbau, bei Kraftfahrzeugen und Schienenfahrzeugen verwendet. Es ist jedoch ein Einsatz für alle Einsatzgebiete von Schrauben- oder allgemeiner von Torsionsfedern denkbar, bei denen die Umweltbedingungen die verwendeten Materialien der Feder nicht in unzulässigem Ausmaß angreifen.

**Figuren**

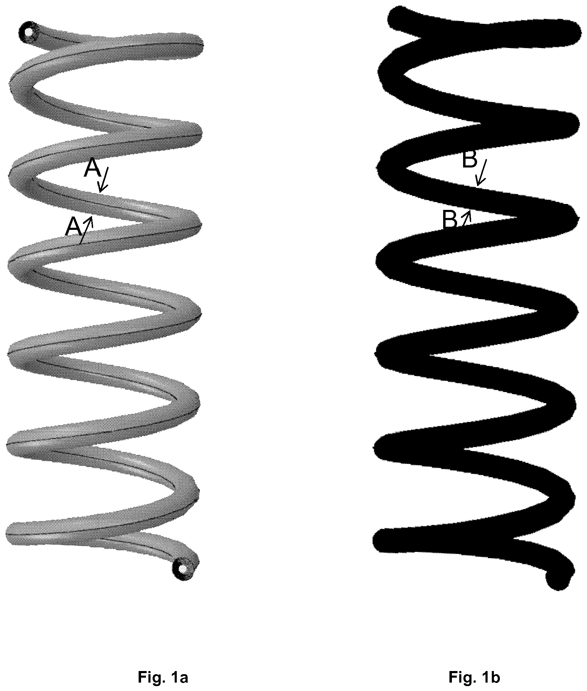

Die Figuren **Fig. 1a** und **Fig. 1b** zeigen schematisch zwei Ausführungsformen der erfindungsgemäßen Torsionsfeder. In Fig. 1a ist diese als Schraubenfeder mit Kern und in Fig. 1b als Schraubenfeder ohne Kern dargestellt.

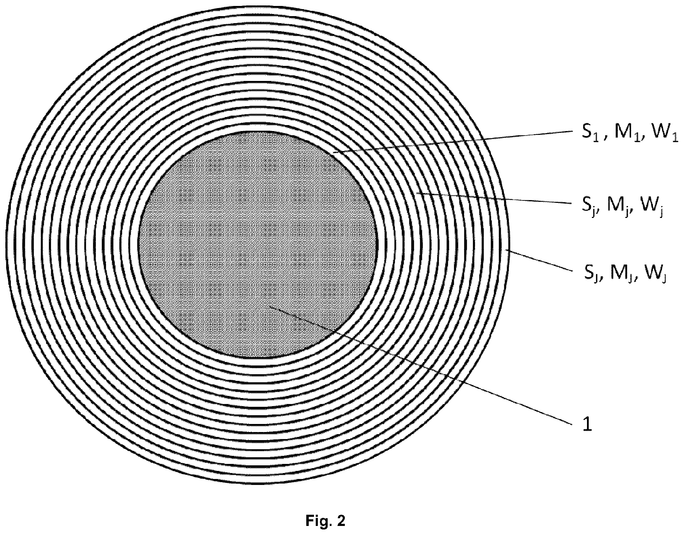

**Fig. 2** zeigt schematisch den Querschnitt A-A einer Feder nach Fig. 1a mit Vollkern (1) und verschiedenen Schichten ($S_1$ bis $S_J$) mit den zugehörigen Schichtwandstärken und Schichtmaterialien

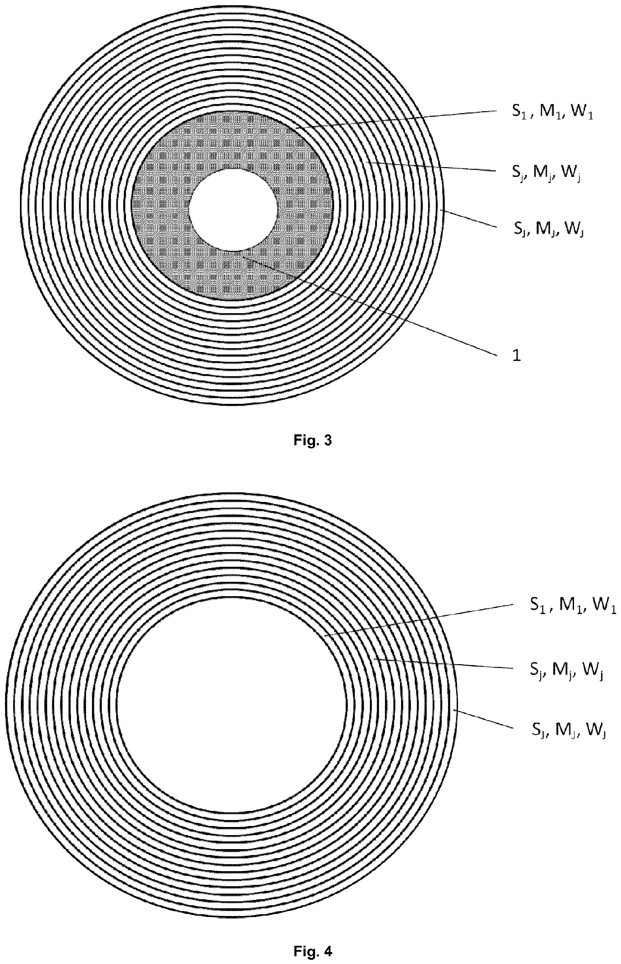

**Fig. 3** zeigt schematisch den Querschnitt A-A einer Feder nach Fig. 1a mit rohrförmigen Kern (1) und verschiedenen Schichten ($S_1$ bis $S_J$) mit den zugehörigen Schichtwandstärken und Schichtmaterialien

**Fig. 4** zeigt schematisch den Querschnitt B-B einer Feder nach Fig. 1b ohne Kern und verschiedenen Schichten ($S_1$ bis $S_J$) mit den zugehörigen Schichtwandstärken und Schichtmaterialien

**Fig. 5** zeigt schematisch die Anordnung der erfindungsgemäßen Federkonstruktion aus Ausführungsbeispiel 1 mit einem geflochtenen Textil und einem Kerndurchmesser von 4mm (Tabelle 1 und 2).

**Fig. 6** zeigt schematisch die Anordnung der erfindungsgemäßen Federkonstruktion aus Ausführungsbeispiel 2 mit einem gewickelten Textil (bspw. auf einer Ringwickelanlage) und einem Kerndurchmesser von 3,5 mm (Tabelle 3 und 4).

**Fig. 7** zeigt schematisch die Anordnung der erfindungsgemäßen Federkonstruktion aus Ausführungsbeispiel 3 mit einem geflochtenen Textil, wobei die 4. Lage ein UD-Gelege ist und auf der Außenseite der Feder eine homogene Kunststoffaußenlage (Tabelle 5 und 6) liegt.

**Tabellen**

**Tabelle 1** zeigt das Ausführungsbeispiel 1 des erfindungsgemäßen Auslegungsverfahrens mit einem geflochtenen Textil und einem Kerndurchmesser von 4mm

**Tabelle 2** zeigt die für das Ausführungsbeispiel 1 eingesetzten Fasermaterialien mit ihren Eigenschaften. Die Eigenschaften sind aus dem Stand der Technik bekannt und wurden hier lediglich zusammengestellt.

**Tabelle 3** zeigt das Ausführungsbeispiel 2 des erfindungsgemäßen Auslegungsverfahrens mit einem gewickelten Textil (bspw. auf einer einer Ringwickelanlage) und einem Kerndurchmesser von 3,5 mm

**Tabelle 4** zeigt die für das Ausführungsbeispiel 2 eingesetzten Fasermaterialien mit ihren Eigenschaften. Die Eigenschaften sind aus dem Stand der Technik bekannt und wurden hier lediglich zusammengestellt.

**Tabelle 5** zeigt das Ausführungsbeispiel 3 des erfindungsgemäßen Auslegungsverfahrens mit einem geflochtenen Textil, wobei die 4. Lage ein UD-Gelege ist und auf der Außenseite der Feder eine homogene Kunststoffaußenlage angeordnet ist.

**Tabelle 6** zeigt die für das Ausführungsbeispiel 3 eingesetzten Fasermaterialien mit ihren Eigenschaften. Die Eigenschaften sind aus dem Stand der Technik bekannt und wurden hier lediglich zusammengestellt.

## Ausführungsbeispiele

Die Berechnung der Querschnittsfläche erfolgt in allen Ausführungsbeispielen über die Formel für den Kreisringquerschnitt. Zu den jeweiligen Ausführungsbeispielen werden die konkreten Sachverhalte mit einer Schnittdarstellung des Federdrahts, einer Tabelle zur Beschreibung der Federdrahtkennwerte und einer Tabelle zur Darstellung der zugeordneten Materialkennwerte beschrieben.

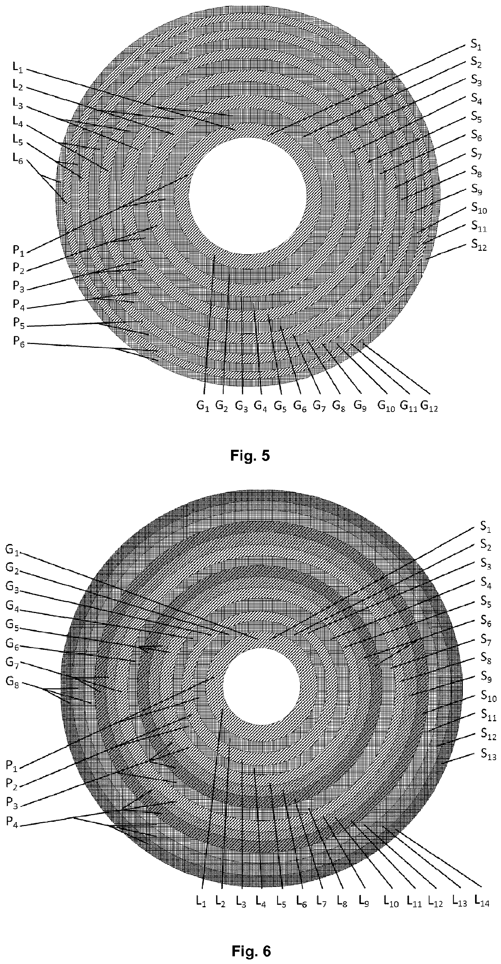

Das Ausführungsbeispiel 1 (Tabelle 1) zeigt eine einfache Konfiguration der erfindungsgemäßen Feder, die aus 6 Lagen eines geflochtenen Textils und einem Hohlkern von 4mm Durchmesser besteht. Die Geflechtlagen bilden die zwölf tragenden Schichten. Gemäß der Konvention wird eine Lage in eine zug- und in eine druckbelastete Schicht aufgeteilt, welche beide denselben Schichtradius aufweisen. In Fig. 5 ist der Federdrahtquerschnitt schematisch dargestellt. Hierbei wird aus Darstellungsgründen bei der Zerlegung immer die druckbelastete Schicht innen dargestellt. Die Berechnung wird dennoch gemäß der Konvention durchgeführt (Tabelle 1). Das Ausführungsbeispiel 1 weist nur als tragende Schichten klassifizierte Schichten auf. Die Textillagen sind so angeordnet, dass sie als zerlegte Schichten einen Faserwinkel von +45° und -45° zur Stabachse aufweisen. Die Geflechtlagen besitzen von innen nach außen Materialien gemäß Tabelle 2. Dabei ist die Materialauswahl derart getroffen, dass die Materialsteifigkeit längs der Faser von innen nach außen abnimmt. Dieses Verhalten bleibt auch nach der Transformation (in diesem Fall ohne Veränderung des Zahlenwertes) in Richtung der Schichtachse erhalten, was sich in einer Reduzierung der Schicht- und Gruppensteifigkeiten von innen nach außen widerspiegelt. Die Schichten liegen abwechselnd in Druck- und Zugrichtung vor, was zur Folge hat, dass jede Schicht eine einzelne Gruppe bildet. Sind die Gruppen von innen nach außen und nach der Druck- und Zugbelastung sortiert, ergeben sich das Druck-Set: ($G_1$, $G_3$, $G_5$, $G_7$, $G_9$, $G_{11}$) für die Druckbelastung und das Zug-Set ($G_2$, $G_4$, $G_6$, $G_8$, $G_{10}$, $G_{12}$) für die Zugbelastung. Die einzelnen Sets weisen dabei eine von innen nach außen abnehmende Gruppensteifigkeit auf. Die innen beginnende Paarbildung verläuft für alle Gruppen erfolgreich, da die Verhältnisse der Gruppendehnsteifigkeiten innerhalb der geforderten Bereiche liegen. Es werden sechs Paare gebildet, welche alle das Gruppenverhältnis von 1 aufweisen. In Ausführungsbeispiel 1 liegen 100% der Federdrahtmasse in Gruppen mit einer von innen nach außen abnehmenden oder gleichbleibenden Gruppensteifigkeit vor. Zugleich sind alle Gruppen Paaren zugeordnet. Somit ist Ausführungsbeispiel 1 erfindungsgemäß eine bevorzugte Ausführungsform mit gleichmäßiger Materialauslastung und einer geringen Kriechneigung.

In Ausführungsbeispiel 2 (Tabelle 3 und 4) liegt eine erfindungsgemäße Federdrahtanordnung vor, die beispielsweise in einem Ringwickelprozess nach dem Stand der Technik hergestellt werden kann und insgesamt 14 Lagen ausweist. Die Darstellung in Fig. 6 entspricht dem prinzipiellen Aufbau mit den Wickellagen und dem Hohlkern von 3,5 mm Durchmesser. An den ersten beiden Schichten ($S_1$ und $S_2$), die auch die ersten beiden Gruppen ($G_1$ und $G_2$) bilden, wird der Fall demonstriert, dass die Fasersteifigkeit entsprechend der Auslastbarkeit der Fasern gewählt wird. Für die druckbelastete Schicht werden IM-Kohlenstofffasern mit höherer Druckfestigkeit und für die zugbelastete Schicht werden UHM-Kohlenstofffasern eingesetzt. Damit die beiden Gruppen bei der Paarbildung ein möglichst schubspannungsarmes Verhalten zeigen, werden die Gruppendehnsteifigkeiten beider Gruppen ($G_1$ und $G_2$) über die Anpassung der Schichtwandstärke einander angenähert, so dass deren Verhältnis innerhalb des Bereichs des besonders bevorzugten Gruppenverhältnisses steht. Die weiter außen liegenden Lagen 5, 6 und 7 bilden zwei Schichten. Aufgrund der technisch möglichen Ablage von gleichem Fasermaterial und gleichem Faserwinkel zur Stabachse bilden die Lagen 6 und 7 nur eine Schicht ($S_6$). Aus den Schichten $S_5$ und $S_6$ ergibt sich die Gruppe $G_5$, weil es sich dabei um mehrere aneinander liegende, tragende Schichten einer Belastungsrichtung handelt. Gruppe 7 ($G_7$) zeigt wie nach der Methodik Schichten ($S_8$, $S_9$ und $S_{10}$) in einer Belastungsrichtung zusammengefasst werden. Diese Schichten weisen in ihrer Höhe abweichende Schichtsteifigkeiten auf, welche durch unterschiedliches Fasermaterial und unterschiedliche Faserwinkel verursacht werden. Die Gruppensteifigkeit der Gruppe 7 errechnet sich als das flächengemittelte arithmetische Mittel der der Gruppe zugehörigen Schichten. In Ausführungsbeispiel 2 besitzen die Sets für Zug- und Druckbelastung, von innen nach außen abnehmende Gruppensteifigkeiten und damit eine gleichmäßige Auslastung. Die auf Basis der Gruppendehnsteifigkeiten erfolgreich gebildeten Paare liegen innerhalb des Bereichs der bevorzugten Gruppenverhältnisse.

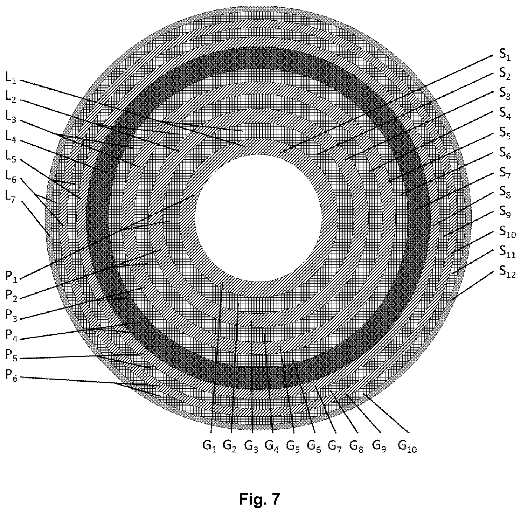

Im Ausführungsbeispiel 3 (Tabelle 5 und 6) ist eine komplexere Konstruktion der erfindungsgemäßen Feder dargestellt. Die Konstruktion entspricht der Darstellung in Fig. 7. Der Federdraht setzt sich von innen nach außen aus drei Lagen geflochtenen Textil ($L_1$, $L_2$ und $L_3$), gefolgt von einer Wickellage ($L_4$), gefolgt von zwei Lagen geflochtenen Textil ($L_5$ und $L_6$) und abschließend gefolgt von einer reinen Kunststofflage ($L_7$) zusammen. Für die geflochtenen Textillagen erfolgt die Schicht- und Gruppenzuweisung sowie die Paarbildung analog zum Ausführungsbeispiel 1. Abweichend hiervon ist der Sachverhalt, dass das eingesetzte Material auch Mischfasern aus in diesem Fall den Grundfasertypen E-Glas und HT-Kohlenstofffasern beinhaltet. Diese sind in ihren Masseanteilen so zusammengesetzt, dass sich unterschiedliche Steifigkeiten insbesondere in Faserlängsrichtung ergeben. Mit der Verwendung der Mischfasern in den geflochtenen Textilien lassen sich die großen Steifigkeitssprünge zwischen der Glas- und Kohlenstofffaser besser vermitteln. In Abgrenzung zu Ausführungsbeispiel 1 liegt ein weiterer wesentlicher Unterschied in den Lagen $L_4$ und $L_7$, welche als nicht-tragend klassifiziert werden und somit keine Gruppen bilden können. Lage 4 besteht hierbei aus einer Kohlenstofffaserlage mit einem Faserwinkel von 0°. Hierbei handelt es sich um eine Schicht mit einem Faserwinkel außerhalb des Bereichs von 20° bis 70° oder des Bereichs von -20° bis -70°, die daher als nicht-tragend klassifiziert ist. Eine derartige Schicht hat eine vorteilhafte Auswirkung auf die Querlastunempfindlichkeit des als Helix um die Federachse gewickelten Federdrahts und ist daher zu einem gewissen Anteil sinnvoll. Die Lage 7 ist ebenso eine nicht-tragende Schicht, weil sie als homogene Kunststofflage keine Vorzugsfaserverstärkung in zug- oder druckorientierter Belastungsrichtung aufweist. Vielmehr stellt die Lage 7 den Abschluss des Federdrahts nach außen zur Umwelt dar. Mögliche Aufgaben sind dabei die Abschirmung gegen mediale Umgebungseinflüsse, ein möglicher Impactschutz (bspw. Steinschläge), eine tribologische Beständigkeit (bspw. reibbeständige Schutzschicht in den Federtellern) oder die Verhinderung von Kontaktkorrosion. Die nicht-tragenden Schichten besitzen einen Masseanteil von 21% bezogen auf die Gesamtmasse des Federdrahtquerschnitts (die Masse eines eventuell vorhandenen Federdrahtkerns wird für die Berechnung nicht berücksichtigt). Da in dieser erfindungsgemäßen Variante die Gruppensteifigkeiten von innen nach außen abnimmt und entsprechend der Methodik alle Gruppen erfolgreich Paare bilden, repräsentieren für beide Anforderungen die Gruppen einen Masseanteil von mehr als 75% und damit ist dieses Ausführungsbeispiel 3 eine bevorzugte Anordnung.

**Bezugszeichenliste**

| | |
|---|---|
| $L_i$ | Lage i (Zählindex i auf dem geschlossene Intervall der natürlichen Zahlen [1,l]) |
| $LW_i$ | Lagenwandstärke der Lage i |
| $S_j$ | Schicht j (Zählindex j auf dem geschlossene Intervall der natürlichen Zahlen [1,J]) |
| $\alpha_j$ | Winkelorientierung zur Stabachse der Schicht $S_j$ |
| 1 | Kern des Federdrahts (optional vorhanden) |
| $M_j$ | Material der Schicht $S_j$ |
| $D_j$ | Schichtdurchmesser der Schicht $S_j$ |
| $W_j$ | Schichtwandstärke der Schicht $S_j$ |
| $E_{S_j}$ | Schichtsteifigkeit der Schicht $S_j$ |
| $E_1$ | Steifigkeit längs zur Faser des Materials $M_j$ |
| $E_2$ | Steifigkeit quer zur Faserrichtung des Materials $M_j$ |
| $G_{12}$ | Schubmodul des Materials $M_j$ |
| $v_{12}$ | Große Querkontraktionszahl des Materials $M_j$ |
| $v_{21}$ | Kleine Querkontraktionszahl des Materials $M_j$ |
| $G_k$ | Gruppe k (Zählindex k auf dem geschlossene Intervall der natürlichen Zahlen [1,K]) |
| $A_{S_j}$ | Querschnittsfläche der Schicht $S_j$ |
| $E_{G_k}$ | Gruppensteifigkeit der Gruppe $G_k$ |
| $F_{G_k}$ | Gruppendehnsteifigkeit der Gruppe $G_k$ |
| $P_n$ | Paar n (Zählindex n auf dem geschlossene Intervall der natürlichen Zahlen [1,N]) |
| $GV_n$ | Gruppenverhältnis n, berechnet aus einer zug- und druckbelasteten Gruppe |
| $D_a$ | Federdrahtaußendurchmesser |
| CF | Kohlenstofffaser |

| BF | Basaltfaser |
| GF | Glasfaser |
| S2 | Höhersteife Glasfaser |
| E | Glasfaser mit normaler Steifigkeit |
| UHM | Kohlenstofffaser mit sehr hoher Steifigkeit (Ultra High Modulus) |
| IM | Kohlenstofffaser mit hoher Steifigkeit (Intermediate Modulus) |
| HT | Kohlenstofffaser mit normaler Steifigkeit (High Tenacity) |

**Zitierte Nichtpatentliteratur**

Helmut Schürmann: Konstruieren mit Faser-Kunststoff-Verbunden, 1. Auflage, Springer Verlag 2005

**Tabelle 1**

| Lage $L_i$ | Schicht $S_j$ | Gruppe $G_k$ | Paar $P_n$ | Klassifizierung | Belastung | Orientierung [Grad] | Material $M_j$ | Lagenwandstärke $LW_i$ [mm] | Schichtwandstärke $W_j$ [mm] | Schichtdurchmesser $D_j$ [mm] | Querschnittsfläche $A_{S_j}$ [mm²] | Masse [kg/m] | FVG [%] | Schichtsteifigkeit $E_{S_j}$ [GPa] | Gruppensteifigkeit $E_{G_k}$ [GPa] | Gruppendehnsteifigkeit $F_{G_k}$ [kN] | Gruppenverhältnis $GV_n$ |
|---|---|---|---|---|---|---|---|---|---|---|---|---|---|---|---|---|---|
| 1 | 1 | 1 | 1 | tragend | druck | -45 | 1 | 2 | 1 | 5 | 7,85 | 0,012 | 50% | 197 | 197 | 1547,2 | 1,00 |
| | 2 | 2 | | tragend | zug | 45 | 1 | | 1 | 5 | 7,85 | 0,012 | 50% | 197 | 197 | 1547,2 | |
| 2 | 3 | 3 | 2 | tragend | druck | -45 | 2 | 1,8 | 0,9 | 6,9 | 9,75 | 0,015 | 50% | 147 | 147 | 1433,9 | 1,00 |
| | 4 | 4 | | tragend | zug | 45 | 2 | | 0,9 | 6,9 | 9,75 | 0,015 | 50% | 147 | 147 | 1433,9 | |
| 3 | 5 | 5 | 3 | tragend | druck | -45 | 3 | 1,6 | 0,8 | 8,6 | 10,81 | 0,016 | 50% | 116 | 116 | 1253,6 | 1,00 |
| | 6 | 6 | | tragend | zug | 45 | 3 | | 0,8 | 8,6 | 10,81 | 0,016 | 50% | 116 | 116 | 1253,6 | |
| 4 | 7 | 7 | 4 | tragend | druck | -45 | 4 | 1,4 | 0,7 | 10,1 | 11,11 | 0,023 | 50% | 49 | 49 | 544,2 | 1,00 |
| | 8 | 8 | | tragend | zug | 45 | 4 | | 0,7 | 10,1 | 11,11 | 0,023 | 50% | 49 | 49 | 544,2 | |
| 5 | 9 | 9 | 5 | tragend | druck | -45 | 5 | 1,2 | 0,6 | 11,4 | 10,74 | 0,020 | 50% | 44,7 | 44,7 | 480,3 | 1,00 |
| | 10 | 10 | | tragend | zug | 45 | 5 | | 0,6 | 11,4 | 10,74 | 0,020 | 50% | 44,7 | 44,7 | 480,3 | |
| 6 | 11 | 11 | 6 | tragend | druck | -45 | 6 | 1 | 0,5 | 12,5 | 9,82 | 0,018 | 50% | 37,9 | 37,9 | 372,1 | 1,00 |
| | 12 | 12 | | tragend | zug | 45 | 6 | | 0,5 | 12,5 | 9,82 | 0,018 | 50% | 37,9 | 37,9 | 372,1 | |

**Tabelle 2**

| Materialnr. | Typ | Steifigkeitsklasse | Dichte [kg/m$^3$] | E1 [GPa] | Beipielkonfiguration [GPa] - 50% FVG | | | | G12 [GPa] |
|---|---|---|---|---|---|---|---|---|---|
| | | | | | E2 [GPa] | nu12 | nu21 | | |
| 1 | CF | UHM | 1500 | 197 | 4,4 | 0,35 | 0,008 | | 2,1 |
| 2 | CF | IM | 1500 | 147 | 5,4 | 0,28 | 0,01 | | 2,3 |
| 3 | CF | HT | 1500 | 116 | 5,4 | 0,28 | 0,01 | | 2,3 |
| 4 | BF | | 2050 | 49 | 6,5 | 0,29 | 0,04 | | 2,5 |
| 5 | GF | S2 | 1870 | 44,7 | 6,4 | 0,29 | 0,04 | | 2,4 |
| 6 | GF | E | 1870 | 37,9 | 5,7 | 0,29 | 0,04 | | 2,1 |

**Tabelle 3**

| Lage | Schicht | Gruppe | Paar | Klassifizierung | Belastung | Orientierung | Material | Lagenwandstärke | Schichtwandstärke | Schichtdurchmesser | Querschnittsfläche | Masse | FVG | Schichtsteifigkeit | Gruppensteifigkeit | Gruppendehnsteifigkeit | Gruppenverhältnis |
|---|---|---|---|---|---|---|---|---|---|---|---|---|---|---|---|---|---|
| $L_i$ | $S_j$ | $G_k$ | $P_n$ | | | [Grad] | $M_j$ | $LW_i$[mm] | $W_j$[mm] | $D_j$[mm] | $A_{Sj}$[mm²] | [kg/m] | [%] | $E_{Sj}$ [GPa] | $E_{Gk}$ [GPa] | $F_{Gk}$[kN] | $GV_n$ |
| 1 | 1 | 1 | 1 | tragend | druck | -45 | 2 | 1,5 | 1,5 | 4,25 | 10,01 | 0,016 | 60% | 175,0 | 175,0 | 1752,4 | 1,16 |
| 2 | 2 | 2 | | tragend | zug | 45 | 1 | 1 | 1 | 5,5 | 8,64 | 0,013 | 60% | 235,0 | 235,0 | 2030,3 | |
| 3 | 3 | 3 | 2 | tragend | druck | -45 | 2 | 1 | 1 | 6,5 | 10,21 | 0,016 | 60% | 175,0 | 175,0 | 1786,8 | 1,15 |
| 4 | 4 | 4 | | tragend | zug | 45 | 2 | 1 | 1 | 7,5 | 11,78 | 0,018 | 60% | 175,0 | 175,0 | 2061,7 | |
| 5 | 5 | 5 | 3 | tragend | | -40 | 3 | 1 | 1 | 8,5 | 13,35 | 0,021 | 60% | 101,4 | 70,9 | 3176,2 | 0,58 |
| 6 | 6 | | | tragend | druck | -45 | 4 | 1 | 2 | 10 | 31,42 | 0,066 | 60% | 58,0 | | | |
| 7 | | | | tragend | | -45 | 4 | 1 | | | | | 60% | | | | |
| 8 | 7 | 6 | | tragend | zug | 40 | 3 | 1 | 1 | 11,5 | 18,06 | 0,028 | 60% | 101,4 | 101,4 | 1832,0 | |

EP 3 132 155 B1

| Lage | Schicht | Gruppe | Paar | Klassifizierung | Belastung | Orientierung | Material | Lagenwandstärke | Schichtwandstärke | Schichtdurchmesser | Querschnittsfläche | Masse | FVG | Schichtsteifigkeit | Gruppensteifigkeit | Gruppendehnsteifigkeit | Gruppenverhältnis |
|---|---|---|---|---|---|---|---|---|---|---|---|---|---|---|---|---|---|
| 9 | 8 |  |  | tragend |  | -45 | 5 | 1 | 1 | 12,5 | 19,63 | 0,038 | 60% | 53,0 |  |  |  |
| 10 | 9 | 7 |  | tragend | druck | -40 | 6 | 1 | 1 | 13,5 | 21,21 | 0,041 | 60% | 47,4 | 40,4 | 2570,2 |  |
| 11 | 10 |  | 4 | tragend |  | -30 | 6 | 1 | 1 | 14,5 | 22,78 | 0,044 | 60% | 23,1 |  |  | 1,22 |
| 12 | 11 |  |  | tragend |  | 45 | 6 | 1 | 1 | 15,5 | 24,35 | 0,047 | 60% | 44,8 |  |  |  |
| 13 | 12 | 8 |  | tragend | zug | 40 | 6 | 1 | 1 | 16,5 | 25,92 | 0,050 | 60% | 40,3 | 40,3 | 3130,2 |  |
| 14 | 13 |  |  | tragend |  | 35 | 5 | 1 | 1 | 17,5 | 27,49 | 0,053 | 60% | 36,2 |  |  |  |

EP 3 132 155 B1

**Tabelle 4**

| Materialnr. | Typ | Steifigkeitsklasse | Dichte [kg/m$^3$] | E1 [GPa] | Beipielkonfiguration [GPa] - 60% FVG | | | | |
|---|---|---|---|---|---|---|---|---|---|
| | | | | | E2 [GPa] | nu12 | nu21 | G12 [GPa] |
| 1 | CF | UHM | 1550 | 235 | 4,6 | 0,35 | 0,007 | 2,4 |
| 2 | CF | IM | 1550 | 175 | 6,2 | 0,26 | 0,01 | 2,8 |
| 3 | CF | HT | 1550 | 139 | 6,3 | 0,26 | 0,01 | 2,7 |
| 4 | BF | | 2100 | 58 | 8 | 0,28 | 0,04 | 3 |
| 5 | GF | S2 | 1930 | 53 | 7,8 | 0,28 | 0,04 | 2,9 |
| 6 | GF | E | 1930 | 44,8 | 6,9 | 0,27 | 0,04 | 2,6 |

**Tabelle 5**

| Lage $L_i$ | Schicht $S_j$ | Gruppe $G_k$ | Paar $P_n$ | Klassifizierung | Belastung | Orientierung [Grad] | Material $M_j$ | Lagenwandstärke $LW_i$ [mm] | Schichtwandstärke $W_j$ [mm] | Schichtdurchmesser $D_j$ [mm] | Querschnittsfläche $A_{S_j}$ [mm²] | Masse [kg/m] | FVG [%] | Schichtsteifigkeit $E_{S_j}$ [GPa] | Gruppensteifigkeit $E_{G_k}$ [GPa] | Gruppendehnsteifigkeit $F_{G_k}$ [kN] | Gruppenverhältnis $GV_n$ |
|---|---|---|---|---|---|---|---|---|---|---|---|---|---|---|---|---|---|
| 1 | 1 | 1 | 1 | tragend | druck | -45 | 1 | 2 | 1 | 5 | 7,85 | 0,012 | 60% | 139 | 139 | 1091,7 | 1,00 |
| | 2 | 2 | | tragend | zug | 45 | 1 | | 1 | 5 | 7,85 | 0,012 | 60% | 139 | 139 | 1091,7 | |
| 2 | 3 | 3 | 2 | tragend | druck | -45 | 2 | 1,8 | 0,9 | 6,9 | 9,75 | 0,016 | 60% | 122 | 122 | 1190,1 | 1,00 |
| | 4 | 4 | | tragend | zug | 45 | 2 | | 0,9 | 6,9 | 9,75 | 0,016 | 60% | 122 | 122 | 1190,1 | |
| 3 | 5 | 5 | 3 | tragend | druck | -45 | 3 | 1,6 | 0,8 | 8,6 | 10,81 | 0,019 | 60% | 96 | 96 | 1037,5 | 1,00 |
| | 6 | 6 | | tragend | zug | 45 | 3 | | 0,8 | 8,6 | 10,81 | 0,019 | 60% | 96 | 96 | 1037,5 | |
| 4 | 7 | | | nicht-tragend | | 0 | 1 | 1,4 | 1,4 | 10,1 | 22,21 | 0,034 | 60% | nicht-tragend | nicht-tragend | nicht-tragend | nicht-tragend |
| 5 | 8 | 7 | 4 | tragend | druck | -45 | 4 | 1,2 | 0,6 | 11,4 | 10,74 | 0,020 | 60% | 70 | 70 | 752,1 | 1,00 |
| | 9 | 8 | | tragend | zug | 45 | 4 | | 0,6 | 11,4 | 10,74 | 0,020 | 60% | 70 | 70 | 752,1 | |
| 6 | 10 | 9 | 5 | tragend | druck | -45 | 5 | 1 | 0,5 | 12,5 | 9,82 | 0,019 | 60% | 53 | 53 | 520,3 | 1,00 |
| | 11 | 10 | | tragend | zug | 45 | 5 | | 0,5 | 12,5 | 9,82 | 0,019 | 60% | 53 | 53 | 520,3 | |
| 7 | 12 | | | nicht-tragend | | | 6 | 0,5 | 0,5 | 13,25 | 10,41 | 0,012 | nur Kunststoff | nicht-tragend | nicht-tragend | nicht-tragend | nicht-tragend |

**Tabelle 6**

| Materialnr. | Typ | Steifigkeitsklasse | Dichte [kg/m$^3$] | E1 [GPa] | Beipielkonfiguration - 60% FVG | | | |
| | | | | | E2 [GPa] | nu12 | nu21 | G12 [GPa] |
|---|---|---|---|---|---|---|---|---|
| 1 | CF | HT | 1550 | 139 | 6,3 | 0,26 | 0,01 | 2,7 |
| 2 | 80%CF+20%GF | 80%HT+20%S2 | 1630 | 122 | 6,4 | 0,26 | 0,01 | 2,8 |
| 3 | 50%CF+50%GF | 80%HT+20%S2 | 1740 | 96 | 7,1 | 0,26 | 0,3 | 2,8 |
| 4 | 20%CF+80%GF | 20%HT+80%S2 | 1850 | 70 | 7,7 | 0,28 | 0,04 | 2,9 |
| 5 | GF | S2 | 1930 | 53 | 7,8 | 0,28 | 0,04 | 2,9 |
| 6 | Kunststoff | PA6 | 1140 | 2,8 | 2,8 | 0,3 | 0,3 | 1,1 |

**Patentansprüche**

1. Torsionsfeder als, Stab- oder Schraubenfeder aus einem Federdraht aus Faserverbundmaterial, aufweisend mehrere Schichten von Faserverstärkung, die mit einem Matrixmaterial getränkt sind, wobei jede Schicht nur Fasern, die im Belastungsfall der Torsionsfeder zugbelastet sind oder nur Fasern, die im Belastungsfall der Torsionsfeder druckbelastet sind, aufweist, **dadurch gekennzeichnet, dass** Gruppen von Schichten existieren, die im Belastungsfall der Torsionsfeder zugbelastet sind und Gruppen von Schichten existieren, die im Belastungsfall der Torsionsfeder druckbelastet sind und sich die Gruppensteifigkeit von mindestens zwei Gruppen unterscheidet.

2. Torsionsfeder nach Anspruch 1, **dadurch gekennzeichnet, dass** sich die Gruppensteifigkeit von Gruppen gleicher Belastungsrichtung unterscheidet.

3. Torsionsfeder nach Anspruch 1, **dadurch gekennzeichnet, dass** sich die Gruppensteifigkeit von Gruppen unterschiedlicher Belastungsrichtung unterscheidet.

4. Torsionsfeder nach Anspruch 1, **dadurch gekennzeichnet, dass** sich die Gruppensteifigkeit aufgrund der Verwendung von verschiedenen Fasermaterialien unterscheidet.

5. Torsionsfeder nach Anspruch 1, **dadurch gekennzeichnet, dass** sich die Gruppensteifigkeit aufgrund der Verwendung von Mischfasern als Fasermaterialien unterscheidet.

6. Torsionsfeder nach Anspruch 1, **dadurch gekennzeichnet, dass** sich die Gruppensteifigkeit aufgrund der Verwendung von verschiedenen Faserwinkeln in verschiedenen Schichten unterscheidet.

7. Torsionsfeder nach Anspruch 1, **dadurch gekennzeichnet, dass** zwischen mindestens zwei Gruppen in einem Set von innen nach außen die Gruppensteifigkeit abnehmend ist.

8. Torsionsfeder nach Anspruch 1 oder 2, **dadurch gekennzeichnet, dass** ein auf den Federdraht, ohne Berücksichtigung der Kernmasse, massebezogener Anteil von mindestens 50%, bevorzugt mindestens 75% und besonders bevorzugt mindestens 95%, in beiden Sets von innen nach außen abnehmende oder gleichbleibende Gruppensteifigkeiten aufweist.

9. Torsionsfeder nach Anspruch 1 oder 2, **dadurch gekennzeichnet, dass** ein auf den Federdraht, ohne Berücksichtigung der Kernmasse, massebezogener Anteil von höchstens 50%, bevorzugt höchstens 40% und besonders bevorzugt höchstens 25%, in den beiden Sets von innen nach außen gleichbleibende Gruppensteifigkeiten aufweisen.

10. Torsionsfeder nach Anspruch 1, **dadurch gekennzeichnet, dass** mindestens ein Paar erfolgreich aus zwei Gruppen gebildet worden ist, welches ein Gruppenverhältnis im Bereich von 0,2 und 5, bevorzugt im Bereich von 0,5 und 2 und besonders bevorzugt im Bereich von 0,75 und 1,33, aufweist.

11. Torsionsfeder nach Anspruch 1 oder 8, **dadurch gekennzeichnet, dass** ein auf den Federdraht, ohne Berücksichtigung der Kernmasse, massebezogener Anteil von mindestens 50%, bevorzugt mindestens 75% und besonders bevorzugt mindestens 95%, der Gruppen erfolgreich Paare gebildet hat.

12. Torsionsfeder nach Anspruch 1, **dadurch gekennzeichnet, dass** für Schichten mit einer Mischung aus Grundfasertypen jeder Grundfasertyp mindestens zu 10% (massebezogen) in der Mischfaserschicht vorliegt.

13. Torsionsfeder nach Anspruch 3, **dadurch gekennzeichnet, dass** in dem Federdraht, ohne Berücksichtigung der Kernmasse, höchstens ein massebezogener Anteil von 25%, bevorzugt von 15% und besonders bevorzugt von 5% in Form von als nicht-tragend klassifizierten Schichten vorliegt.

14. Torsionsfeder nach Anspruch 1, **dadurch gekennzeichnet, dass** der Federdraht einen kreisförmigen, ellipsoiden oder polygonalen Querschnitt aufweist.

15. Torsionsfeder nach Anspruch 1, **dadurch gekennzeichnet, dass** die Matrix der faserverstärkten Kunststofflagen aus einem gefüllten oder ungefüllten duroplastischen Kunststoff besteht.

16. Torsionsfeder nach Anspruch 1, **dadurch gekennzeichnet, dass** der Federstab einen Kern aufweist, der

   a. hohl ist, oder
   b. aus faserverstärktem Material mit unidirektionalen Fasern in Achsrichtung des Federstabes besteht oder
   c. aus Material ohne Faserverstärkung besteht.

17. Verfahren zur Auslegung einer Torsionsfeder, als Staboder Schraubenfeder aus einem mehrlagigen Faserverbundmaterial, **dadurch gekennzeichnet, dass** die folgenden Schritte ausgeführt werden: a. Vorauslegung der Feder b. Gruppen von Fasern aus aneinanderliegenden Schichten gleicher Belastungsrichtung bilden, c. rechnerische Ermittlung der Gruppensteifigkeiten jeder Gruppe, d. rechnerisches Sortieren der Gruppensteifigkeiten in 2 Sets in der Reihenfolge von innen nach außen, so dass ein erstes Set ausschließlich aus zugbeanspruchten Gruppen (Zug-Set) und ein zweites Set ausschließlich aus druckbeanspruchten Gruppen (Druck-Set) besteht, e. Anpassung der Gruppensteifigkeit innerhalb jedes Sets derart, dass die Gruppensteifigkeit von innen nach außen abnimmt oder zumindest gleichbleibend ist, f. Bildung von Paaren von innen nach außen, derart, dass immer eine radial benachbarte zugund eine druckbelastete Gruppe ein Paar bilden, g. Ermittlung des Gruppenverhältnisses als Quotient der Gruppendehnsteifigkeiten der zugbelasteten zu den druckbelasteten Gruppen eines Paares h. Minimierung der Schubspannungen zwischen benachbarter Gruppen durch Variation der Steifigkeitsverhältnisse mittels

   - Variation der Schichtwandstärke und/oder
   - Variation der Materialart und/oder
   - Variation der Faserwinkel bis das Gruppenverhältnis im Bereich von 0,2 bis 5 liegt. i. Wiederholung der Schritte b. bis h. bis die angestrebte Tragfähigkeit bei gegebenem Federsteifigkeitsverlauf erreicht ist.

18. Verfahren nach Anspruch 17, **dadurch gekennzeichnet, dass** die Anpassung der Gruppensteifigkeit nach Schritt 1 d. erfolgt, indem a. das Fasermaterial gewechselt wird, und/oder b. die Mischungen verschiedener Fasermaterialien gewechselt wird, und/oder c. der Faserwinkel verändert wird.

## Claims

1. A torsion spring, as a bar spring or helical spring comprising a spring wire of fiber composite material, comprising a number of layers of fiber reinforcement, which are impregnated with a matrix material, whereby each layer comprising only tensile-loaded fibers when the torsion spring is loaded or only compression-loaded fibers when the torsion spring is loaded, **characterized in that** groups of layers exist which are tensile-loaded when the torsion spring is loaded and groups of layers exist which are compression-loaded when the torsion spring is loaded and the group stiffness of at least two groups differs.

2. The torsion spring as claimed in claim 1, **characterized in that** the group stiffness of groups of the same loading direction differs.

3. The torsion spring as claimed in claim 1, **characterized in that** the group stiffness of groups of different loading directions differs.

4. The torsion spring as claimed in claim 1, **characterized in that** the group stiffness differs due to the use of different fiber materials.

5. The torsion spring as claimed in claim 1, **characterized in that** the group stiffness differs due to the use of mixed fibers as fiber materials.

6. The torsion spring as claimed in claim 1, **characterized in that** the group stiffness differs due to the use of different fiber angles in different layers.

7. The torsion spring as claimed in claim 1, **characterized in that** the group stiffness is decreasing from the inside to the outside between at least two groups in a set.

8. The torsion spring as claimed in claim 1 or 2, **characterized in that** a mass-related fraction, with respect to the spring wire, disregarding the core mass, of at least 50%, preferably at least 75% and particularly preferably at least 95%, in the two sets has group stiffnesses that decrease or remain the same from the inside to the outside.

9. The torsion spring as claimed in claim 1 or 2, **characterized in that** a mass-related fraction, with respect to the spring wire, disregarding the core mass, of at most 50%, preferably at most 40% and particularly preferably at most 25%, in the two sets has group stiffnesses that remain the same from the inside to the outside.

10. The torsion spring as claimed in claim 1, **characterized in that** at least one pair that has a group ratio in the range of 0.2 and 5, preferably in the range of 0.5 and 2 and particularly preferably in the range of 0.75 and 1.33, has been successfully formed from two groups.

11. The torsion spring as claimed in claim 1 or 8, **characterized in that** a mass-related fraction, with respect to the spring wire, disregarding the core mass, of at least 50%, preferably at least 75% and particularly preferably at least 95%, of the groups has successfully formed pairs.

12. The torsion spring as claimed in claim 1, **characterized in that**, for layers with a mixture of base fiber types, each base fiber type is in the mixed fiber layer in a proportion of at least 10% (mass-related).

13. The torsion spring as claimed in claim 3, **characterized in that**, in the spring wire, disregarding the core mass, there is at most a mass-related fraction of 25%, preferably of 15% and particularly preferably of 5%, in the form of layers classified as non-load-bearing.

14. The torsion spring as claimed in claim 1, **characterized in that** the spring wire has a circular, ellipsoidal or polygonal cross section.

15. The torsion spring as claimed in claim 1, **characterized in that** the matrix of the fiber-reinforced plastic plies consists of a filled or unfilled thermosetting plastic.

16. The torsion spring as claimed in claim 1, **characterized in that** the spring bar comprises a core which

   a. is hollow, or
   b. consists of fiber-reinforced material with unidirectional fibers in the axial direction of the spring bar or
   c. consists of material without fiber reinforcement.

17. A method for designing a torsion spring, as a bar spring or helical spring, of a multi-ply fiber composite material, **characterized in that** the following steps are carried out:

   a. pre-design of the spring
   b. forming groups of fibers from layers of the same loading direction lying one against the other,
   c. computational determination of the group stiffnesses of each group,
   d. computational sorting of the group stiffnesses into two sets in the sequence from the inside to the outside, so that a first set consists exclusively of tensile-loaded groups (tensile set) and a second set consists exclusively of compression-loaded groups (compression set),
   e. adaptation of the group stiffness within each set in such a way that the group stiffness decreases, or at least remains the same, from the inside to the outside,
   f. formation of pairs from the inside to the outside in such a way that a tensile-loaded group and a compression-loaded group that are radially adjacent always form a pair,
   g. determination of the group ratio as a quotient of the group extensional stiffnesses of the tensile-loaded and compression-loaded groups of a pair,
   h. minimization of the shear stresses between adjacent groups by variation of the stiffness ratios by means of

      - variation of the layer wall thickness and/or
      - variation of the type of material and/or
      - variation of the fiber angles

   until the group ratio lies in the range of 0.2 to 5,
   i. repetition of steps b. to h. until the load-bearing capacity aimed for with a given spring stiffness profile is achieved.

18. The method as claimed in claim 17, **characterized in that** the adaptation of the group stiffness according to step 1d. is performed by

a. the fiber material being alternated, and/or

b. the mixtures of different fiber materials being alternated, and/or

c. the fiber angle being varied.

**Revendications**

1. Ressort de torsion sous la forme d'un ressort en barre ou d'un ressort hélicoïdal constitué d'un fil pour ressort en un matériau composite fibreux, comprenant plusieurs couches de renforcement par fibres qui sont imprégnées d'un matériau de matrice, chaque couche ne possédant que des fibres qui sont soumises à une contrainte de traction en cas de sollicitation du ressort de torsion ou que des fibres qui sont soumises à une contrainte de compression en cas de sollicitation du ressort de torsion, **caractérisé en ce qu'**il existe des groupes de couches qui, en cas de sollicitation du ressort de torsion, sont soumis à une contrainte de traction et il existe des groupes de couches qui, en cas de sollicitation du ressort de torsion, sont soumis à une contrainte de compression, et la rigidité de groupe d'au moins deux groupes se différenciant.

2. Ressort de torsion selon la revendication 1, **caractérisé en ce que** la rigidité de groupe de groupes du même sens de sollicitation se différencie.

3. Ressort de torsion selon la revendication 1, **caractérisé en ce que** la rigidité de groupe de groupes de sens de sollicitation différents se différencie.

4. Ressort de torsion selon la revendication 1, **caractérisé en ce que** la rigidité de groupe se différencie en raison de l'utilisation de matériaux fibreux différents.

5. Ressort de torsion selon la revendication 1, **caractérisé en ce que** la rigidité de groupe se différencie en raison de l'utilisation de fibres mélangées en tant que matériaux fibreux.

6. Ressort de torsion selon la revendication 1, **caractérisé en ce que** la rigidité de groupe se différencie en raison de l'utilisation d'angles de fibres différents dans les différentes couches.

7. Ressort de torsion selon la revendication 1, **caractérisé en ce que** la rigidité de groupe diminue de l'intérieur vers l'extérieur entre au moins deux groupes dans un ensemble.

8. Ressort de torsion selon la revendication 1 ou 2, **caractérisé en ce qu'**une part massique d'au moins 50 %, de préférence d'au moins 75 % et particulièrement de préférence d'au moins 95 % sur le fil pour ressort, sans tenir compte de la masse du noyau, présente des rigidités de groupe qui diminuent ou qui sont constantes de l'intérieur vers l'extérieur dans les deux ensembles.

9. Ressort de torsion selon la revendication 1 ou 2, **caractérisé en ce qu'**une part massique maximale de 50 %, de préférence maximale de 40 % et particulièrement de préférence maximale de 25 % sur le fil pour ressort, sans tenir compte de la masse du noyau, présente des rigidités de groupe qui sont constantes de l'intérieur vers l'extérieur dans les deux ensembles.

10. Ressort de torsion selon la revendication 1, **caractérisé en ce qu'**au moins une paire a réussi à être formée à partir de deux groupes, laquelle présente un rapport de groupe dans la plage de 0,2 à 5, de préférence dans la plage de 0,5 à 2 et particulièrement de préférence de 0,75 à 1,33.

11. Ressort de torsion selon la revendication 1 ou 8, **caractérisé en ce qu'**une part massique d'au moins 50 %, de préférence d'au moins 75 % et particulièrement de préférence d'au moins 95 % des groupes sur le fil pour ressort, sans tenir compte de la masse du noyau, a formé des paires réussies.

12. Ressort de torsion selon la revendication 1, **caractérisé en ce que** pour les couches avec un mélange de types de fibres de base, chaque type de fibres de base est présent à raison d'au moins 10 % (massiques) dans la couche de mélange de fibres.

13. Ressort de torsion selon la revendication 3, **caractérisé en ce que** dans le fil pour ressort, sans tenir compte de la masse du noyau, au maximum une part massique de 25 %, de préférence de 15 % et notamment de préférence de 5 % est présente sous la forme de couches classifiées comme non porteuses.

14. Ressort de torsion selon la revendication 1, **caractérisé en ce que** le fil pour ressort présente une section transversale circulaire, ellipsoïde ou polygonale.

15. Ressort de torsion selon la revendication 1, **caractérisé en ce que** la matrice des couches de matière plastique renforcées de fibres se compose d'une matière plastique thermodurcissable chargée ou non chargée.

16. Ressort de torsion selon la revendication 1, **caractérisé en ce que** le ressort en barre possède un noyau qui

   a. est creux ou
   b. se compose d'un matériau renforcé de fibres ayant des fibres unidirectionnelles dans la direction de l'axe du ressort en barre ou
   c. se compose d'un matériau sans renforcement par des fibres.

17. Procédé de conception d'un ressort de torsion, sous la forme d'un ressort en barre ou d'un ressort hélicoïdal en un matériau composite fibreux multicouche, **caractérisé en ce que** les étapes suivantes sont exécutées : a. pré-élaboration du ressort, b. formation de groupes de fibres à partir de couches juxtaposées ayant la même direction de sollicitation, c. détermination mathématique des rigidités de groupe de chaque groupe, d. tri mathématique des rigidités de groupe en 2 ensembles dans l'ordre de l'intérieur vers l'extérieur, de sorte qu'un premier ensemble se compose exclusivement de groupes soumis à une contrainte de traction (ensemble de traction) et qu'un deuxième ensemble se compose exclusivement de groupes soumis à une contrainte de compression (ensemble de compression), e. adaptation de la rigidité de groupe au sein de chaque ensemble de telle sorte que la rigidité de groupe diminue ou est au moins constante de l'intérieur vers l'extérieur, f. formation de paires de l'intérieur vers l'extérieur de telle sorte qu'un groupe voisin dans le sens radial soumis à une contrainte de traction et un groupe soumis à une contrainte de compression forment toujours une paire, g. détermination du rapport de groupe en tant que quotient des rigidités d'extension de groupe des groupes d'une paire soumis à une contrainte de traction par rapport à ceux soumis à une contrainte de compression, h. réduction au minimum des contraintes de cisaillement entre les groupes voisins par variation des rapports de rigidité au moyen de

   - variation de l'épaisseur de paroi de couche et/ou
   - variation du type de matériau et/ou
   - variation de l'angle des fibres jusqu'à ce que le rapport de groupe se trouve dans la plage de 0,2 à 5, i. répétition des étapes b. à h. jusqu'à ce que la capacité de charge désirée avec un tracé donné de la rigidité de ressort soit atteinte.

18. Procédé selon la revendication 17, **caractérisé en ce que** l'adaptation de la rigidité de groupe après l'étape 1 d. s'effectue en a. changeant le matériau des fibres et/ou b. changeant les mélanges de différents matériaux de fibres et/ou c. modifiant l'angle des fibres.

Fig. 1a                                    Fig. 1b

$S_1, M_1, W_1$

$S_j, M_j, W_j$

$S_J, M_J, W_J$

1

Fig. 2

$S_1$, $M_1$, $W_1$

$S_j$, $M_j$, $W_j$

$S_J$, $M_J$, $W_J$

1

**Fig. 3**

$S_1$, $M_1$, $W_1$

$S_j$, $M_j$, $W_j$

$S_J$, $M_J$, $W_J$

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0637700 A
- US 5603490 A

- WO 2014014481 A1
- US 2014021666 A1

**In der Beschreibung aufgeführte Nicht-Patentliteratur**

- **HELMUT SCHÜRMANN.** Konstruieren mit Faser-Kunststoff-Verbunden. Springer Verlag, 2005